# EUROPEAN PATENT APPLICATION

(11) **EP 1 830 318 A1**
(43) Date of publication of application: **05.09.2007**
(21) Application number: 06075478.5
(22) Date of filing: 02.03.2006
(51) Int. Cl.: G06Q 30/00

(54) **Method and control unit for displaying a message on a plurality of display device**

(71) Applicant: Koninklijke KPN N.V., 2516 CK The Hague (NL)
(72) Inventor: Baken, Nicolaius Henricus Gerardus, 2271 EE Voorburg (NL)
(74) Representative: Wuyts, Koenraad Maria

(57) **Abstract**

The invention relates to a method and control unit (2) for displaying a message on a plurality of noticeably arranged display devices (3). The control unit (2) receives at least one display request (DR) from a customer device (8, 9) for displaying said message on said display devices. The display request comprises data indicative of at least the one or more locations of said display devices that should display said message and a time at which said message should be displayed at said display devices at said indicated locations. The message (M) is provided to said display devices in accordance with said locations and time indicated in said display request.

## Description

### FIELD OF THE INVENTION

Generally, the invention relates to the field of data communication. More specifically, the invention relates to the field of displaying messages on display devices.

### BACKGROUND OF THE INVENTION

The information exposure of people in public places has increased dramatically of the last few decades. Wall papers, static and dynamic bill boards etc. confront passers-by with the displayed information. As an example, dynamic bill boards are provided in football stadiums to allow the display of advertisements.

More recently, a drastically increasing amount of display panels is installed in public places to display information of parties that control the display panels. As an example, narrow casting involves the control by a single party (a retailer owning a plurality of stores, for example) of the content displayed on a plurality of display screens on several locations.

Another recent trend involves the increased desire of people to communicate with other people on any particular moment and share their experiences. The multi-media capabilities of contemporary handheld devices and the emerge of wireless networks to transfer complicated messages enable people to share their experiences. As an example, the multimedia messaging service (MMS), being an extension of the popular short message service (SMS), allows owners of handheld devices to record a short video message or take a picture and transmit the video message or picture to another handheld device.

### SUMMARY OF THE INVENTION

It is an object of the invention to provide an improved communication method and system.

A method is provided that allows displaying at least one message on one or more display devices that are noticeably arranged at one or more locations. The method involves receiving at a control unit at least one display request from a customer device for displaying said message on said display devices. The display request comprises data indicative of at least the one or more locations of said display devices that should display said message and a time at which said message should be displayed at said display devices at said indicated locations. The method further provides the message to said display devices in accordance with said locations and time indicated in said display request.

Furthermore, a computer program is provided comprising computer-readable and executable instructions for performing the method of the previous paragraph.

Still further, a control unit is provided that is arranged for controlling one or more display devices to display at least one message. The control unit comprises a first interface configured for receiving at least one display request from a customer device for displaying said message on said display devices. The display request comprises data indicative of at least the one or more locations of said display devices that should display said message and a time at which said message should be displayed at said display devices at said indicated locations. A processor is provided that is arranged for retrieving said locations and time from said display request. Furthermore, the control unit comprises a second interface configured for providing said message to said display devices in accordance with said locations and time indicated in said display request.

Also, a messaging system is disclosed comprising the control unit of the previous paragraph and a plurality of display devices, wherein said display devices are located at public places.

Finally, a customer device is proposed for use in the messaging system of the previous paragraph. The customer device comprises software code portions for composing the display request for performing the above-described method.

The disclosed method and control unit allow third parties, i.e. parties not in permanent control of the control unit, that are in the possession of an appropriate customer device to display their personal messages on display panels in public places. Consequently, third parties are capable of reaching people that do not possess or have temporarily not available electronic means for electronically receiving the message. By enabling the third party to indicate where and when the message should be displayed, communication between people is further improved.

It should be appreciated that display devices, apart from displaying messages, may be capable of providing further human perceptible signals, such as sound. The display devices may be capable of providing virtual reality images or three-dimensional images.

Although the invention allows to provide a collection of default messages that are available at the control unit and that may be selected, and possibly customized, the embodiment of the invention as defined in claim 2 has the advantage that the message can be composed entirely according to the user's preferences. In other words, the contents of the message are determined by the user of the customer device.

The embodiments of the invention as defined in claims 3 and 17 allows the user of the customer device to generate and send the message to be displayed to control unit using the customer device. In particular, a handheld customer device allows the user to record a message on site and send the same to the control unit using the advanced multimedia capabilities of present handheld devices.

Although in principle a display device may be capable of displaying a plurality of messages simultaneously, it may occur that a display request cannot be acknowledged because the display devices at a particular location and particular time have already been booked. The embodiments of the invention as defined in claims 4 and 18 have the advantage that the user of the customer device is informed on the available locations and times. It should be appreciated that available locations and times for displaying the message may also be communicated to the customer device in advance of sending the display request.

The embodiments of the invention as defined in claims 5 and 19 have the advantage of a simple mechanism to influence the odds that the person for which the message is intended, may actually see the message. Furthermore, the control unit may offer default durations that allows easy scheduling of messages to be displayed and coupling of price of displaying a message to the desired duration of the display.

The embodiments of the invention as defined in claims 6 and 20 are advantageous in that a more detailed display request is obtained. For instance, if a message comprises an advertisement, the display request may indicate that the advertisement should only be displayed on display devices of mobile bodies at a particular location.

The embodiments of the invention as defined in claims 7 and 21 are advantageous that a further personalisation of the message can be established.

The amount of displays panels for displaying the message is scarce by nature and, consequently, a selection mechanism for acknowledging display requests is desired. The embodiments of the invention as defined in claims 8, 9, 22 and 23 and 22 are advantageous in that the auction engine of the implementation of a price mechanism in deciding which display request is acknowledged. However, it should be acknowledged that other mechanisms may be applied, such as a first-come first-served mechanism. Furthermore, an auction mechanism minimizes the chance that available locations and times for displaying messages remain unused.

The embodiments of the invention as defined in claims 10 and 24 provide the advantage that user's may schedule a message in advance of its display on the display device.

The embodiments of the invention as defined in claims 11 and 25 prevent display of offensive messages on the display devices.

It should be noted that the above defined embodiments, and aspects thereof, may be combined.

The invention will be further illustrated with reference to the attached drawings, which schematically show a preferred embodiment according to the invention. It will be understood that the invention is not in any way restricted to this specific and preferred embodiment.

### BRIEF DESCRIPTION OF THE DRAWINGS

In the drawings:
FIG. 1 shows a schematic illustration of a messaging system according to an embodiment of the invention;
FIG. 2 shows a schematic illustration of a control unit of the messaging system of FIG. 1;
FIGS. 3A and 3B show communication diagrams according to an embodiment of the invention;
FIGS. 4A and 4B show two examples of menu-structures for a customer unit according to an embodiment of the invention, and
FIG. 5 shows a schematic illustration of a plurality of interconnected messaging systems according to an embodiment of the invention.

### DETAILED DESCRIPTION OF THE DRAWINGS

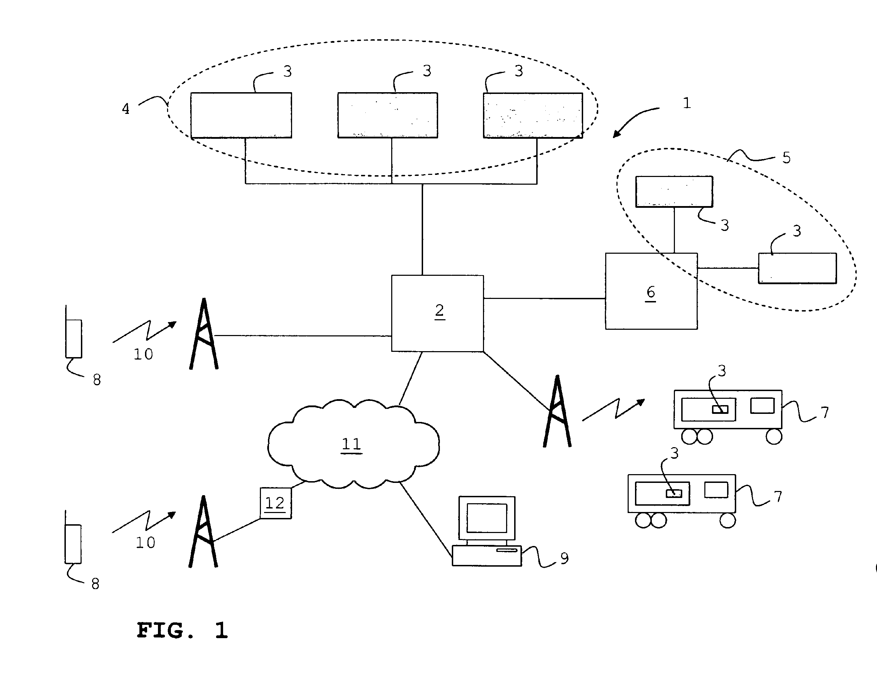

FIG. 1 is a schematic illustration of a messaging system 1 comprising a control unit 2 and a plurality of display devices 3 arranged in public places. A first group 4 of display devices 3 at a first location is connected directly to the control unit 2. A second group 5 of display devices 3 at a second location is connected via an intermediary system 6 to the control unit 2. Further display devices 3 are installed in mobile bodies 7, such as vehicles, and are wirelessly connected to the control unit 2.

It should be appreciated that further alternatives for communicative connection of display devices to the control unit fall within the scope of the present invention. Also, it is noted that apart from the display of images, the display devices 3 may be capable to provide further human perceptible signals, including audio signals.

Customer devices 8, 9 may connect to the control unit 2 via a wireless network 10, a wired network 11 or a combination of both. The wireless network 10 may be connected to the wired network 11 via a gateway 12. The customer devices 8 comprise handheld devices, such as a mobile phone, a notebook or a personal digital assistant (PDA). However, a common desktop personal computer 9 may be used as well.

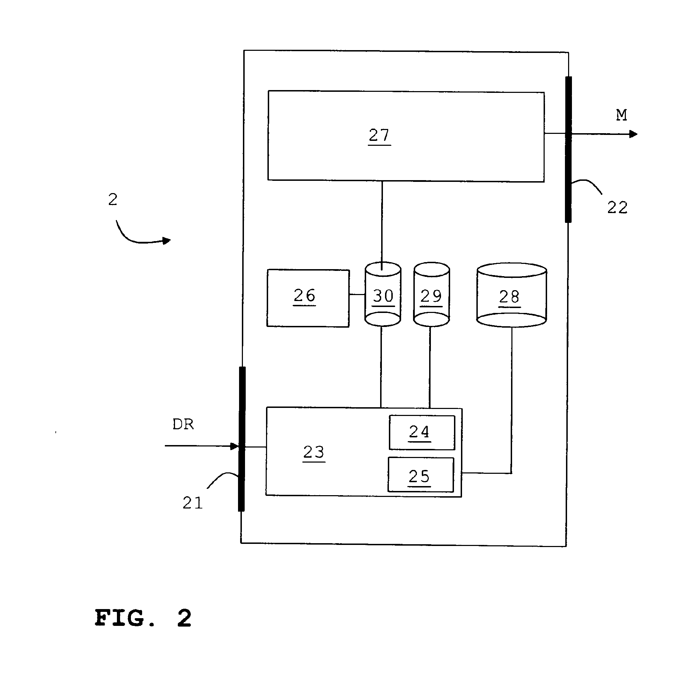

The control unit 2 is configured to receive instructions from the customer devices 8, 9, as will be explained in further detail with reference to FIG. 2.

The control unit 2 comprises a first interface 21 for receiving display requests DR from the customer devices 8, 9 and a second interface 22 configured for providing messages M to the display devices 3 at a desired location 4, 5 and/or time. The display request DR comprises data indicative of at least one or more locations 4, 5 of the display devices 3 that should display the message M and a time at which the message M should be displayed at the display devices 3. A processor 23 is provided for retrieving locations and time from the display request DR. The processor 23 comprises an auction engine 24 and an option engine 25 that will be described in further detail below. The control unit 2 further has an authorization module 26 and a scheduling engine 27. Finally, the control unit 2 has databases 28-30 containing, respectively, available locations of display devices 3 and available times for displaying a message M, further selectable settings for the message (e.g. a background, a melody, a voice of a celebrity that should be played with the message M, etc.) and the composed message. It should be appreciated that the databases are not necessarily an integral part of the control unit 2, but may alternatively be accessible for the control unit 2 at some other unit.

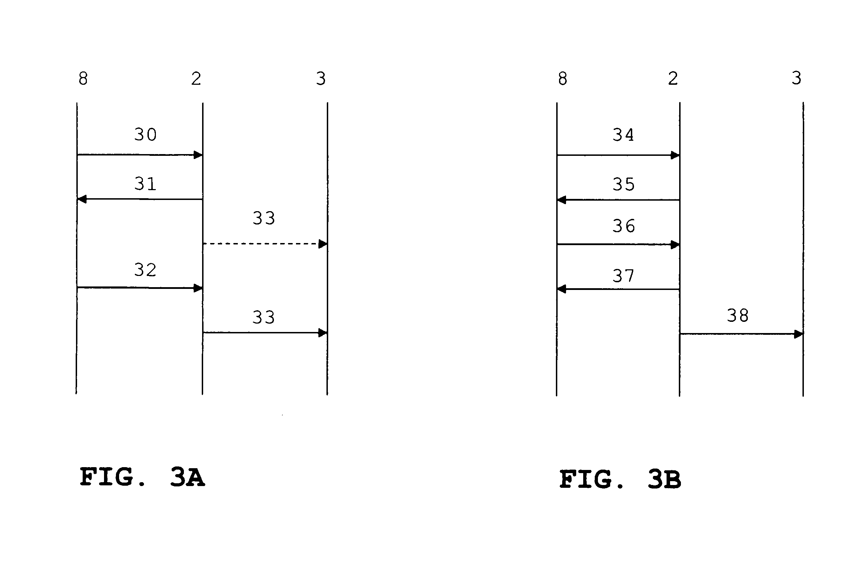

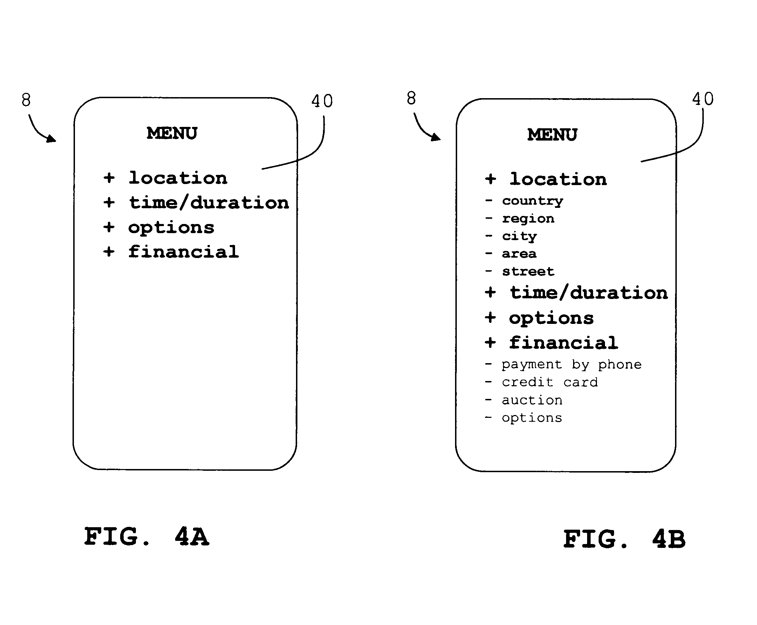

An example of the operation of the control unit 2 will now be described with reference to FIGS. 3A and 3B and FIGS. 4A and 4B.

In a simple example, a user of a handheld customer device 8 composes a message, e.g. a video message, and selects from a menu 40 on his handheld device 8, a location, time and duration for the display of the message M on the display devices 3. As an example, the user may desire to have the message displayed on all display devices 3 in the area 5, on March 28, 2006 between 09:00 and 09:10. He may record voice or add text, e.g. "Happy Birthday Deirdre". In step 30, the customer device 8 of the user transmits these data as a display request DR to the control unit 2. The processor 23 of the control unit 2 retrieves the data indicative of the location (display devices 3 in area 5) and time (March 28, 2006 from 09:00 until 09:10) for display of the message from the display request DR and checks with the database 28 whether said time and location are available. If so, in step 31, the control unit 2 acknowledges receipt of the message and confirms that the message will be displayed on the displayed location and time (step 33). If the location and time have already been booked, the processor 23 retrieves optional locations and/or times from the database 28 and transmits these to the customer device 8 in step 31. The user may select one of the available locations/times and transmit a second display request DR to the control unit 2 in step 32. In step 33, the message is transmitted via the second interface 22 to the display devices 3.

In an alternative embodiment, displayed in the communication diagram of FIG. 3B, a request is sent from the customer device 8 for one or more available locations and times to the control unit 2 in step 34. The request may contain constraints indicated by the user as to what locations and/or times should be checked in order to avoid clearly undesirable locations and times. The processor 23 retrieves one or more of the available locations and times (within the constraints of the initial request, if applicable) and the control unit 2 transmits these to the customer device 8 in step 35. The user makes a selection and sends the message M and the selected location and time to the control unit 2 (step 36). The user may add a background or a voice to his message M, obtained from the database 29, to determine the 'look-and-feel' of the message. In step 37, the control unit 2 transmits a preview of the message to the customer device 8. The user approves the message in step 37. The message M to be displayed is then stored in the database 30. At this stage, the authorization module 26 checks whether the contents of the message M may be offensive, preferably according to predetermined standards. The authorization check may either be performed automatically or by human intervention. If the contents of the message M is considered offensive, the message M is deleted and a notification may be transmitted to the customer device 8. If the contents of the message is approved, the scheduler engine 27 retrieves the message M from the database substantially at the indicated time for display of the message and transmits the message M via the interface 22 to the display devices 3 in the area 5 (step 38).

Payment for the display service may be accomplished by any means. As an example, users may subscribe to the display service and be billed via their phone bill. The control unit 2 may contain a subscription engine (not shown). Alternatively, a pre-paid business model may be used. A further option includes online payment before or after sending the display request DR.

The applicant has envisaged that the popularity of the display service may give rise to problems. As an example, special occasions like Valentine's Day or New years Eve may trigger a large amount of display requests. Although a first-come first-served model may be applied, the applicant believes that the implementation of a market mechanism in the control unit 2 may best serve both the interests of the operator of the control unit 2 and the users. For this purpose, the control unit 2 has an auction engine 24 and an option engine 25.

The auction engine 24 allows the control unit 2 to auction location/time combinations. Users may submit bids to the control unit 2, i.e. the control unit receives a plurality of display requests DR, each comprising data indicative of a desired price for displaying the message M on the display devices 3 at a particular location and a particular time. The auction engine 24 processes the display requests to select, while taking account of said location and time, the display request, the message whereof will be displayed on said display devices. Selection of bid is based on the price. When the bid of a user is granted during the auction (i.e. the bid turns out to be the highest bid received before the auction deadline), the message M of that user will be displayed on the display devices 3. The message M itself may be transmitted before or after the auction.

In addition, the option engine 25 of the control unit 2 may issue options to customer devices 8, 9. The options relates to particular future available location/time combinations or location/time/duration combinations. If the options have a value at the expiration time, the option will be exercised and a message M will be displayed.

The applicant has considered that there are further attractive cases for third parties to buy options for displaying a message on the display devices 3. The display of the message on the display devices may be made dependent on the occurrence of a certain event or trigger, wherein the option is exercised in case the event occurs or the trigger is activated. As an example, a manufacturer of beer or ice may buy an option for displaying a message (advertisement) on the display devices if the outside temperature exceeds a threshold of e.g. 25 °C. Another example may be a political party that desires to display further messages for the electorate in dependence on the polls before the election day.

It will be clear that the proposed market mechanism by using the auction engine 24 and/or option engine 25 provides a fair balance between supply and demand of location and time for display of the message M on the display devices 3. Furthermore, the proposed mechanism reduces the chance that display time is not used. The mechanism induces trade of locations and time and ensures that the appropriate price is paid for a particular combination of location and time for display of the message M.

More particularly with reference to FIGS. 4A and 4B, a location may be selected from the menu 40 of the customer device 8. The location may involve a country, region, city, area, street etc. It should be appreciated that the locations not necessarily relation to geographic locations. Alternative locations may be envisaged, e.g. sport stadiums, bus stops, shopping malls etc. Cross-relations may be indicated, e.g. only bus stops in a particular area. Also, the time and duration may be selected from the customer device 8. For this purpose, the calendar function of the customer device 8 may be used. It is noted that the available duration may either be standardized (e.g. only blocks of 10 minutes) or freely chosen. Options may be selected on the customer device 8, e.g. to determine the 'look-and-feel' of the message M to be displayed on the display devices 3. A further item of the menu 40 may comprise "financial". This menu item enables the user of a customer device 8 to select a mode of payment. As an example, the user may select that the display request DR from the customer device 8 relates to participation in an auction, as explained in detail above. It should be appreciated that the customer device 8 may have stored software code portions to allow the operation of the customer device as indicated above.

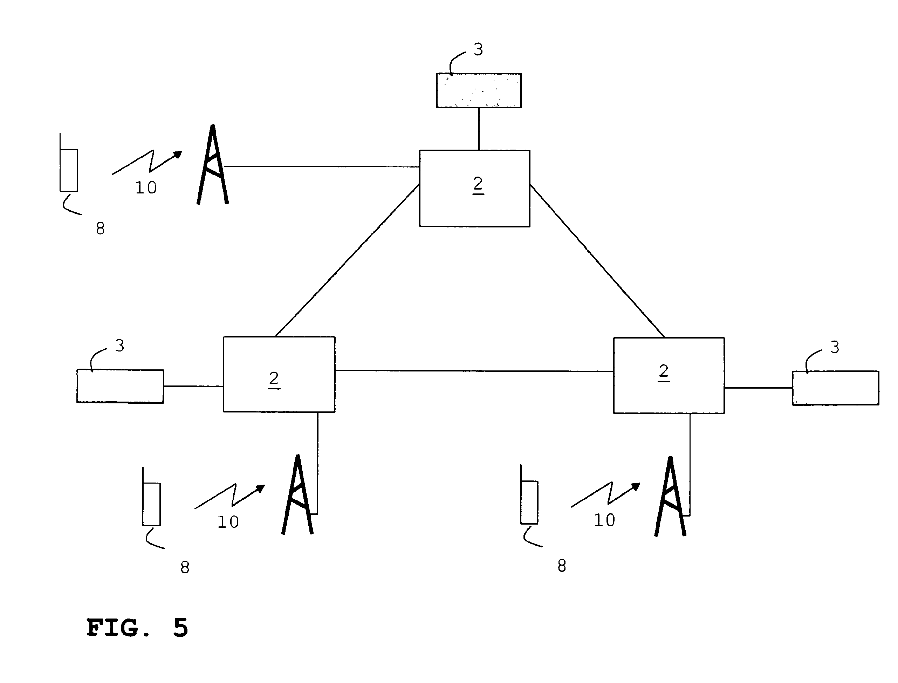

Finally, with reference now to FIG. 5, it may turn out to be efficient to set up a plurality of control units 2 in order to enhance services to the users, e.g. to allow display of messages in several countries, each having its control unit 2. The control units may be interconnected in order to allow a user send a display request DR to a first control unit 2 of a first area and to have a message M displayed in another area under the control of a second control unit 2.

It should be appreciated that the invention is not limited to the embodiment described above. As an example, the control unit 2 may store a collection of default messages that may be selected for display on the display devices 3 on a particular location and time. The control unit 2 may be capable of allowing customisation of such default messages. Alternatively, the indication of the location and time for display of the message M may be received at the control unit 2 from a first customer device 8, whereas the actual message M is received from a second device, such as the personal computer 9.

Furthermore, the display request DR may comprise data indicative of the type of display devices 3 that should display the message M. As an example, the display request may indicate that only mobile display devices should display the message M.

## Claims

1. A method of displaying at least one message (M) on one or more display devices (3) that are noticeably arranged at one or more locations (4, 5), said method comprising the steps of:
- receiving at a control unit (2) at least one display request (DR) from a customer device (8, 9) for displaying said message on said display devices, said display request comprising data indicative of at least the one or more locations of said display devices that should display said message and a time at which said message should be displayed at said display devices at said indicated locations, and
- providing said message to said display devices in accordance with said locations and time indicated in said display request.

2. The method according to claim 1, further comprising the step of receiving said message (M) to be displayed.

3. The method according to claim 2, further comprising the step of receiving said message (M) at said control unit (2) from said customer device (8, 9).

4. The method according to one or more of the preceding claims, wherein said control unit (2) has access to the available locations and available times for displaying said message (M) on said display devices (3), said method comprising the step (31, 35) of transmitting one or more of said available locations and/or available times to said customer device (8, 9).

5. The method according to one or more of the preceding claims, wherein said display request (DR) further comprises data indicative of a duration during which said message (M) should be displayed on said display devices (3).

6. The method according to one or more of the preceding claims, wherein said display request (DR) further comprises data indicative of the type of display devices (3) that should display the message (M).

7. The method according to one or more of the preceding claims, wherein said display request (DR) further comprises data indicative of the desired 'look-and-feel' of the message to be displayed.

8. The method according to one or more of the preceding claims, wherein said control unit (2) further comprises an auction engine (24), said method further comprising the steps of:
- receiving a plurality of display requests (DR), each comprising data indicative of a desired price for displaying said message (M) on said display devices (3) at a particular location and a particular time;
- processing said display requests by said auction engine to select on the basis of said desired price, while taking account of said location and time, the display request, the message whereof will be displayed on said display devices.

9. The method according to one or more of the preceding claims, wherein said control unit (2) is further arranged for issuing call options to said customer device (8, 9) with regard to one or more locations and a time for displaying said message, said method comprising the steps of:
- receiving a display request (DR) for displaying a message (M) in the future at said particular locations and time;
- issuing a call option to said customer device in response to receiving said future display request, and
- providing said message to said display devices (3) if said call option is exercised.

10. The method according to one or more of the preceding claims, wherein said control unit (2) comprises a schedule engine (27) and a storage means (30), said method comprising the steps of:
- storing a future display request (DR) or associated message (M) in said storage means for future display of said message on said display devices (3);
- activating the schedule engine to display said message on said display devices at said indicated time.

11. The method according to one or more of the preceding claims, wherein said control unit (2) further comprises an authorization module (26), said method comprising the step of processing said message (M) by said authorization module in order to check the contents of said message before the message is displayed on said display devices (3).

12. The method according to one or more of the preceding claims, wherein said display devices (3) are located at public places.

13. The method according to claim 12, wherein said display devices (3) are arranged on mobile bodies (7).

14. The method according to one or more of the preceding claims, wherein said customer device is a handheld device (8).

15. A computer program comprising computer-readable instructions capable of being executed by a computer, programmed network computer or other programmable device for performing the method of one or more of the claims 1-14.

16. A control unit (2) arranged for controlling one or more display devices (3) to display at least one message (M), said control unit comprising:
- a first interface (21) configured for receiving at least one display request (DR) from a customer device (8, 9) for displaying said message on said display devices, said display request comprising data indicative of at least the one or more locations (4, 5) of said display devices that should display said message and a time at which said message should be displayed at said display devices at said indicated locations
- a processor (23) arranged for retrieving said locations and time from said display request, and
- a second interface (22) configured for providing said message to said display devices in accordance with said locations and time indicated in said display request.

17. The control unit (2) according to claim 16, wherein said first interface (21) is further configured for receiving said message (M) from said customer device (8, 9).

18. The control unit (2) according to claim 16 or 17, further comprising a database (28) storing or capable of storing available locations and times for displaying said message (M) on said display devices (3) and wherein said control unit is further configured for transmitting one or more of said available locations and/or available times to said customer device (8, 9).

19. The control unit (2) according to one or more of the claims 16-18, wherein said processor (23) is further configured to retrieve from said display request (DR) a desired duration for displaying said message (M) on said display devices (3).

20. The control unit (2) according to one or more of the claims 16-19, wherein said processor (23) is further configured to retrieve from said display request (DR) the type of display devices (3) that should display the message (M).

21. The control unit (2) according to one or more of the claims 16-20, wherein said processor (23) is further configured to retrieve from said display request (DR) the desired 'look-and-feel' of the message (M) to be displayed.

22. The control unit (2) according to one or more of the claims 16-21, wherein said control unit further comprises or has access to an auction engine (24) and said processor (23) is configured for retrieve a desired price from each of a plurality of display requests (DR), each comprising data indicative of said desired price for displaying said message on said display devices at a particular location and time, said auction engine being configured for processing said display requests to select on the basis of said desired price, while taking account of said location and time, the display request, the message (M) whereof will be displayed on said display devices.

23. The control unit (2) according to one or more of the claims 16-22, wherein said control unit further comprises or has access to an option issuing engine (25) and said processor (23) is configured for retrieving from said display request (DR) one or more particular locations and a time in the future at which said message (M) should be displayed on said display devices (3) and wherein said option issuing engine is configured for issuing a call option in response to receiving said future display request and wherein said control unit is arranged for providing said message to said display devices if said call option is exercised.

24. The control unit (2) according to one or more of the claims 16-23, wherein said control unit further comprises or has access to a schedule engine (27) and storage means (30) storing or capable of storing a display request (DR) or associated message (M) and said processor (23) is configured to retrieve from said display request a future time for display of said message and said schedule engine is arranged for having said message displayed at said future time on said display devices.

25. The control unit (2) according to one or more of the claims 16-23, wherein said control unit further comprises or has access an authorization module (26) configured for checking the contents of said message (M) before said message is displayed on said display devices.

26. The control unit (2) according to one or more of the preceding claims, wherein said first interface (21) is configured for receiving display requests (DR) from handheld customer devices (8).

27. A messaging system (1) comprising a control unit (2) according to one or more of the claims 16-26 and a plurality of display devices (3), wherein said display device are located at public places.

28. The messaging system (1) according to claim 27, wherein said display devices (3) are arranged on mobile bodies (7).

29. A customer device (8, 9) for use in a messaging system (1) according to claims 27 or 28, said customer device comprising software code portions for composing the display request for performing the method according to claims 1-14.
